# EUROPÄISCHE PATENTSCHRIFT

(11) **EP 0 718 592 B1**
(45) Veröffentlichungstag und Bekanntmachung des Hinweises auf die Patenterteilung: **08.08.2001**
(21) Anmeldenummer: 95119818.3
(22) Anmeldetag: 15.12.1995
(51) Int. Cl.: G01B 7/00

(54) **Abstands/Positions-Messvorrichtung**
Device for measuring distances/positions
Dispositif de mesure de distances/positions

(30) Priorität: 21.12.1994 DE 4445819
(43) Veröffentlichungstag der Anmeldung: 26.06.1996
(73) Patentinhaber: HONEYWELL AG, 63067 Offenbach am Main (DE)
(72) Erfinder: Milosevic, Dragutin, D-63538 Grosskrotzenburg (DE)
(74) Vertreter: Sturm, Christoph, Dipl.-Ing.

(56) Entgegenhaltungen:
- DE-A- 4 137 092
- DE-A- 4 323 780
- DE-C- 4 141 264
- DE-U- 9 102 007
- US-A- 4 677 384
- US-A- 4 709 209
- "Proximity Sensors for the Aircraft Industry", Scientific Honeyweller, Herbst 1987, S. 85-90, auf Seite 1 der Anmeldung zitiert

## Beschreibung

Die vorliegende Erfindung bezieht sich auf eine Kombination nach dem Gattungsbegriff des Patentanspruches 1.

Eine bekannte Meßvorrichtung dieser Art umfaßt einen externen, insbesondere durch ein metallisches Betätigungselement (Target) verstimmbaren Sensor, der über Drähte an ein entfernt angeordnetes Interface angeschlossen ist. Der Sensor besteht aus einer durch das Target verstimmbaren Induktivität und einer festen Induktivität, die beide mit Widerständen in dem Interface in einer Brückenschaltung betrieben werden, die durch einen Oszillator mit fester Frequenz gespeist wird. Die in der Brückendiagonale auftretende Spannung ist eine Funktion des Abstandes zwischen Sensor und Target und wird ausgewertet. Durch bestimmte, noch zu beschreibende Tests (BITE = Built In Test) können verschiedene Fehlerquellen in der Meßvorrichtung festgestellt werden.

Eine derartige bekannte Meßvorrichtung ist in der Firmenzeitschrift "Scientific Honeyweller", Herbst 1987 auf den Seiten 85 bis 90 beschrieben.

Ferner ist es aus der DE-A 41 37 092 bekannt, ein digitales Element, wie z.B. eine Codescheibe mit einem analogen Meßwertgeber, wie z.B. einem Potentiometer zu kombinieren, um in einer nachgeordneten Auswerteschaltung bestimmten Meßwerten eine zugehörige Umdrehungszahl zuzuordnen.

Schließlich zeigt die DE-C 41 41 264 einen induktiven Annäherungssensor mit einer Brückenschaltung und einer an die Brückendiagonale angeschlossenen Auswerteschaltung. Die Auswerteschaltung wirkt derart auf eine steuerbare Quelle innerhalb der Brücke zurück, daß die Brückenspannung in der Diagonalen auf den konstanten Wert der nichtverstimmten Brücke zurückgeführt wird.

Letztlich lehrt die DE-U-91 02 007 eine Brückenschaltung, die räumlich weit von einer Auswerteelektronik entfernt ist und die auf mechanische Beschädigungen, wie z.B. Drahtbrüche überwacht werden kann, indem eine Verarbeitungseinheit Schalteinrichtungen derart betätigt, daß ein Prüfwiderstand der Brücke zugeschaltet wird, der die Brücke verstimmt.

Bislang ist es jedoch nicht möglich festzustellen, ob die Verstimmung der Brückenschaltung durch die zu detektierende Bewegung des Targets oder durch Veränderungen der Komponenten der Brücke, z.B. infolge Alterung der Komponenten verursacht wird. Für bestimmte sicherheitskritische Anwendugnen, z.B. bei der Überwachung daraufhin, ob ein Fahrwerk eines Flugzeugs ausgefahren ist oder nicht, ist jedoch eine solche Überprüfung von wesentlicher Bedeutung.

Die vorliegende Erfindung löst dieser Aufgabe gemäß den kennzeichnenden Merkmalen des Patentanspruches 1. Weitere vorteilhafte Ausgestaltungen der erfindungsgemäßen Kombination sind den abhängigen Ansprüchen entnehmbar.

Anhand der Figuren der beiliegenden Zeichnung wird im folgenden ein Ausführungsbeispiel der Erfindung näher beschrieben. Es zeigen:
- Fig. 1: das bekannte Grundprinzip der Meßvorrichtung;
- Fig. 2: die Schaltungsanordnung dieser Meßvorrichtung;
- Fig. 2a: das Diagramm einer Transferkennlinie, d.h. der Spannung V_{T} über dem Targetabstand s;
- Fig. 3: die Schaltung gemäß Fig. 2 mit eingebauten Prüfmöglichkeiten und einer zugeordneten Auswerteschaltung; und
- Fig. 4: ein der Erläuterung der verschiedenen Prüfungen dienendes Diagramm.

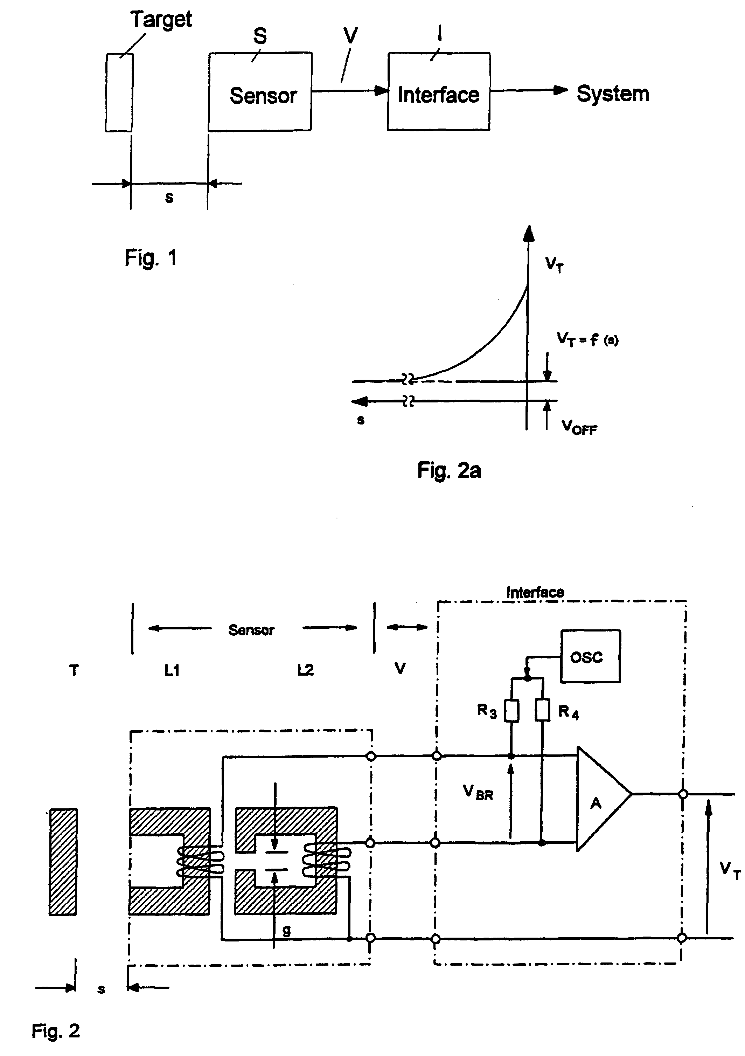

Gemäß Fig. 1 erfaßt ein Sensor S die Nähe eines Targets T und gibt sein Signal über eine Verdrahtung V an ein entfernt angeordnetes Interface, das seinerseits das ausgewertete Signal an ein angeschlossenes System ausgibt.

Gemäß Fig. 2 bilden der Sensor S und das Interface eine Brückenschaltung, die von einem Oszillator mit fester Frequenz im Interface gespeist wird. Die Brückenschaltung umfaßt eine durch das Target T in Abhängigkeit von dem Abstand s veränderliche Induktivität L1 und eine feste Induktivität L2. Durch einen Luftspalt g im Kern der Referenzinduktivität L2 kann die Brückenschaltung so dimensioniert werden, daß bei einem entfernten Target (s = ∞) eine endliche definierte Offset-Spannung V_{OFF} vorliegt. Bei der Verkleinerung des Abstandes des Targets T von ∞ auf Null (Berührung) steigt die Induktivität und somit die Impedanz der Sensorspule L1 stetig an.

Über die Verdrahtung V ist zu jeder Spule L1, L2 ein Widerstand R3, R4 in Reihe geschaltet. An die Brückendiagonale ist ein die Brückenspannung VBR erfassender Differenzverstärker A angeschlossen, der das Meßsignal V_{T} der Meßvorrichtung ausgibt.

Die Ausgangsspannung V_{T} des Differenzverstärkers A gibt somit eine stetige Information über den Abstand s zwischen dem Target T und dem Sensor S. Eine typische Transferkennlinie V_{T} = f(s) ist in Fig. 2a dargestellt.

Durch die Verwendung des passiven Sensors zeichnet sich die vorstehend beschriebene Schaltungsanordnung durch eine extreme hohe Zuverlässigkeit aus, die im wesentlichen durch die Zuverlässigkeit von vier Lötstellen bestimmt wird und eine solche Schaltungsanordnung wird deswegen vorzugsweise in kritischen Anwendungen, wie beispielsweise bei der Fahrwerk-Steuerung in der Luftfahrt eingesetzt.

Kritische Anwendungen erfordern zusätzlich verschiedene Grade der Funktionsüberwachung bzw. Fehlererkennung und Meldung.

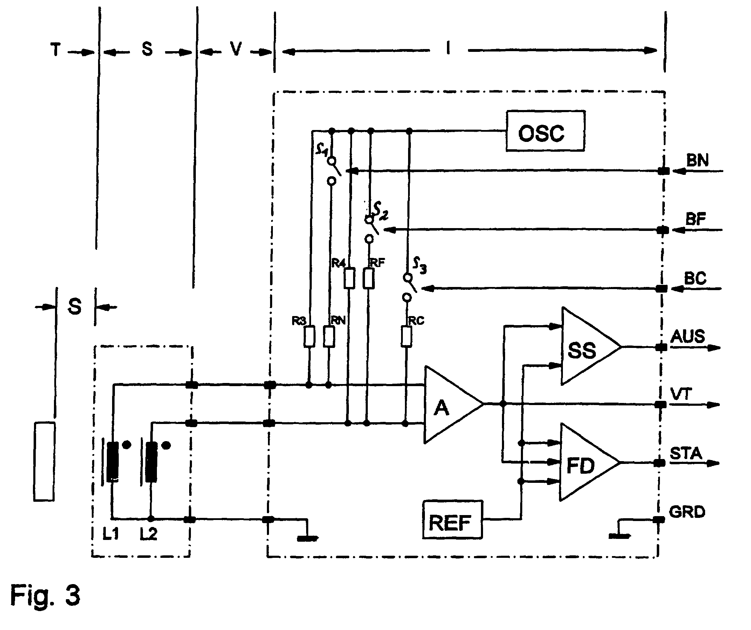

Zu diesem Zweck können gemäß Fig. 3 über äußere Eingänge BN (BITE Near) und BF (BITE Far) an dem Interface I über Schalter S1 und S2 Widerstände R_{N} und R_{F} den Widerständen R3 und R4 parallelgeschaltet werden.

An den Ausgang des Differenzverstärkers A sind jeweils parallel ein Schwellwertschalter SS und ein Fensterdiskriminator FD angeschlossen, die zusätzlich von einer Referenzspannung REF beaufschlagt werden und ein Ausgangssignal AUS und ein Statussignal STA liefern.

Zudem wird das Ausgangssignal V_{T} des Differenzverstärkers A direkt an einem Ausgang V_{T} ausgegeben.

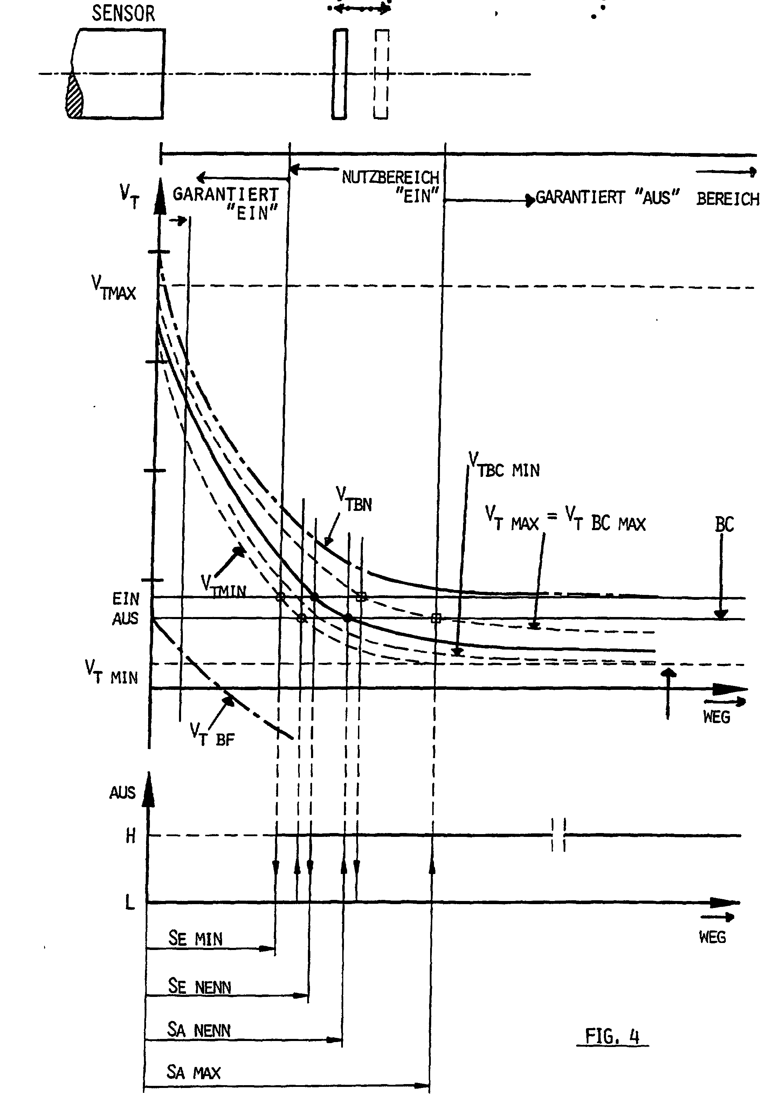

Folgende Fehlererkennungsvorrichtungen sind bislang bereits verwirklicht worden und werden anhand der Figuren 3 und 4 nachfolgend beschrieben.

### 1. Integrität der Verbindung zwischen Sensor und Interface.

Im Falle von Einzelader-Unterbrechungen, Doppelader-Unterbrechungen, Unterbrechungen aller Einzeldrähte, Kurzschlüssen zwischen Einzeladern sowie zwischen allen drei Adern wird die Brücke so verstimmt, daß das Signal V_{T} sich außerhalb des durch V_{Tmin} und V_{Tmax} definierten Toleranzbereiches bewegen wird.

Dies kann in einfacher Weise mittels des Fensterdiskriminators FD überwacht und als eine H (High) oder L (Low)-Information am Statusausgang STA angezeigt werden. Diese Status-Überwachung deckt auch größere Verstimmungen im Sensor ab.

### 2. Fehler in der Signalverarbeitungskette des Interface.

Im Falle eines Fehlers in der Signalverarbeitungskette des Interface (Ausfall des Differenzverstärkers A, des Schwellwertschalters SS, der Spannungsreferenz REF) nimmt der Ausgang AUS einen der zwei möglichen Zustände, d.h. "H" oder "L" ein.

Von der Systemseite kann man nun nicht unterscheiden, ob z.B. das Signal "H" auftritt, weil das Target entfernt ist oder ob das Signal "H" auftritt, weil ein Fehler in der Signalverarbeitung vorliegt.

Durch ein externes Signal BN kann über den Schalter S1 der Widerstand R_{N} dem Widerstand R3 parallelgeschaltet und die Brücke so verstimmt werden, daß ihr Zustand dem Zustand "Target angenähert" entspricht. Dies ist durch den Signalverlauf V_{TBN} in Fig. 4 veranschaulicht. Wechselt hierbei der Ausgang AUS nicht von "H" auf "L", so liegt ein Fehler in der Signalverarbeitungskette vor. Umgekehrt kann bei einer Anzeige "L" durch das Prüfsignal BF der Schalter S2 betätigt werden und der Widerstand R_{F} dem Widerstand R4 parallelgeschaltet werden, so daß die Brücke entsprechend dem Zustand "Target entfernt" verstimmt wird. Der sich ergebende Kurvenverlauf ist in Fig. 4 durch V_{TBF} veranschaulicht. Erfolgt hierbei ein Wechsel des Ausganges AUS von "L" auf "H", so ist dies eine Anzeige für eine intakte Signalverarbeitungskette.

Zusammenfassend ist also festzustellen, daß durch die Prüfsignale BN und BF eine Auskunft darüber erhalten wird, ob die Signalverarbeitungskette des Interface die Verstimmung der Brücke richtig weitergibt.

Nicht überwacht wurde bislang der Sachverhalt, ob die Verstimmung der Brücke durch die zu detektierende Bewegung des Targets oder durch Veränderungen der Komponenten der Brücke verursacht wird. Mit der vorliegenden Erfindung läßt sich dies feststellen.

Eine typische Nenn-Transferkennlinie des erfindungsgemäßen Abstandssensors ist in Fig. 4 durch die voll ausgezogene Linie dargestellt, wobei die Spannung V_{T} über dem Weg aufgetragen ist.

Berücksichtigt man alle Einflüsse, wie z.B. Temperaturschwankungen im Sensor und im Interface, die Langzeitdrift der Brückenkomponenten sowie die Fertigungstoleranzen, so ergibt sich im schlimmsten Fall (worst case) ein Toleranzbereich, der durch die Kurven V_{Tmin} und V_{Tmax} definiert ist.

Wenn die Pegel "Ein" und "Aus" die Werte der Schwellen des Schwellwertschalters SS im schlechtesten Fall darstellen, so ergeben sich ein minimaler Einschaltabstand S_{Emin} und ein maximaler Ausschaltabstand S_{Amax}. Von der Anwenderseite ist nunmehr sicherzustellen, daß das Target die Stellung im Bereich "garantiert Ein" für die Stellung "angenähert" bzw. im Bereich "garantiert Aus" für die Stellung "entfernt" einnimmt.

Aus Praktischen Gründen wird der Bereich "Ein" z.B. bei der radialen Annäherung eines Targets auf den Bereich "Nutzbereich Ein" eingeengt.

Die Erfindung geht nun von der Tatsache aus, daß für eine definierte Konstellation der Meßvorrichtung ein definierter Verlauf der Funktion V_{T} = f(Weg) innerhalb der Grenzen V_{Tmin} und V_{Tmax} vorliegt.

Befindet sich zum Zeitpunkt der Überprüfung die Kennlinie außerhalb des durch V_{Tmin} und V_{Tmax} vorgegebenen Toleranzbereiches, so liegt eine Störung vor.

Dies kann beispielsweise mittels einer Analog/Digital-Wandlung der Transferkennlinie und Vergleich mit einer in einem Festwertspeicher ROM abgespeicherten Information bezüglich V_{Tmin} und V_{Tmax} erfolgen, wobei beispielsweise ein Mikroprozessor die entsprechenden Werte vergleicht.

Eine einfache analoge Lösung des Problems kann über einen Eingang BC (Balance Check) bei der Stellung des Targets im Bereich "Garantiert Aus" erfolgen, der einen Schalter S3 betätigt, durch welchen dem Widerstand R4 ein Widerstand R_{C} parallelgeschaltet wird. Hierdurch wird die Brücke um den in Fig. 4 eingezeichneten Betrag BC verstimmt.

Liegt nunmehr die effektive Transferkennlinie im zulässigen Toleranzbereich, so muß die verschobene Kennlinie den Pegel V_{Tmin} unterschreiten und die Status-Anzeige STA muß aktiviert werden. Befindet sich das Target im Bereich "Garantiert Aus" so darf die Status-Anzeige STA nicht aktiviert werden, wenn das Signal BC nicht anliegt.

## Patentansprüche

1. Kombination einer Abstands-/Positions-Meßvorrichtung mit einer Auswerteschaltung, mit Mitteln zur Vorgabe eines durch zulässige Bauelementtoleranzen bestimmten Bereiches zwischen einer maximalen Transferkennlinie (V_{Tmax}) und einer minimalen Transferkennlinie (V_{Tmin}) und Mitteln zur Überprüfung, ob eine tatsächliche Transferkennlinie (f(s)) der Ausgangsspannung (V_{T}) innerhalb dieses Bereiches liegt, wobei die Meßvorrichtung eine symmetrische Brückenschaltung aufweist, die aus einer Quelle (OSC) gespeist wird und in ihren Zweigen jeweils eine Reihenschaltung aus einem ersten Widerstand (R3) bzw. einem zweiten Widerstand(R4) und einem durch ein Target (T) verstimmbaren ersten Element (L1) bzw. zweiten Element (L2) aufweist, und deren Diagonale an die Auswerteschaltung (A, FD, SS, REF) angeschlossen ist, zur Ausgabe eines ersten Signals (L) bei angenähertem Target und eines zweiten Signals (H) bei entferntem Target in Abhängigkeit davon, ob die Transferkennlinie (V_{T}) einen vorgegebenen Referenzwert über- oder unterschreitet, wobei die Auswerteschaltung dritte und vierte Widerstände (R_{N},R_{F}) aufweist, die über einen ersten und einen zweiten Schalter (S1, S2) zur Simulation eines angenäherten bzw. entfernten Targets(T) den ersten und zweiten Widerständen (R3,R4) jeweils parallel zuschaltbar sind, **dadurch gekennzeichnet**, daß die Auswerteschaltung einen fünften Widerstand (R_{C}) aufweist, der über einen dritten Schalter (S3) dem zweiten Widerstand (R4) der Brückenschaltung bei entferntem Target zur Verstimmung der Spannung am Ausgang der Brückenschaltung um einen Wert (BC), der mindestens so groß wie ein durch Bauelementtoleranzen vorgegebener Toleranzbereich ist, parallel zuschaltbar ist.

2. Kombination nach Anspruch 1, **dadurch gekennzeichnet**, daß die Auswerteschaltung umfaßt:
einen an die Diagonale der Brückenschaltung (L1, L2, R3, R4) angeschlossenen Differenzverstärker (A);
einen an den Ausgang des Differenzverstärkers (A) angeschlossenen Schwellwertschalter (SS);
einen an den Ausgang des Differenzverstärkers (A) angeschlossenen Fensterdiskriminator (FD); und
eine Referenzspannungsquelle (REF), die an den Schwellwertschalter (SS) und den Fensterdiskriminator (FD) jeweils angeschlossen ist.

3. Kombination nach Anspruch 2, wobei die Brückenschaltung eine durch das Target (T) verstimmbare Induktivität (L1) als erstes Element, eine feste Induktivität (L2) als zweites Element sowie zwei jeweils hierzu in Reihe geschaltete Widerstände (R3, R4) aufweist und die Widerstände in einem von dem Sensor (S; L1, L2) beabstandeten Interface (I) angeordnet sind, **dadurch gekennzeichnet**, daß über Eingänge (BN, BF, BC) des Interface (I) den ersten und zweiten Widerständen (R3, R4) die weiteren Widerstände (R_{N}, R_{F}, R_{C}) parallel zuschaltbar sind.

## Claims

1. Combination of a distance/position measurement apparatus with an evaluation circuit, having means for presetting a range, which is governed by permissible component tolerances, between a maximum transfer characteristic (V_{Tmax}) and a minimum transfer characteristic (V_{Tmin}), and means for checking whether an actual transfer characteristic (f(s)) of the output voltage (V_{T}) is within this range, with the measurement apparatus having a balanced bridge circuit which is fed from a source (OSC) and each of whose paths has a series circuit comprising a first resistor (R3) or a second resistor (R4), respectively, and a first element (L1) or second element (L2), respectively, which can be tuned by a target (T), and whose diagonal is connected to the evaluation circuit (A, FD, SS, REF) for outputting a first signal (L) when the target is in the vicinity and a second signal (H) when the target is at a distance, depending on whether the transfer characteristic (V_{T}) is greater than or less than a predetermined reference value, with the evaluation circuit having third and fourth resistors (R_{N}, R_{F}) which can be respectively connected in parallel with the first and second resistors (R3, R4) via a first and a second switch (S1, S2) in order to simulate a target (T) which is in the vicinity or is at a distance, characterized in that the evaluation circuit has a fifth resistor (R_{C}) which can be connected in parallel, via a third switch (S3), with the second resistor (R4) in the bridge circuit when the target is at a distance in order to tune the voltage at the output of the bridge circuit by a value (BC) which is at least as large as the tolerance range predetermined by component tolerances.

2. Combination according to Claim 1, characterized in that the evaluation circuit comprises:
a differential amplifier (A) connected to the diagonal of the bridge circuit (L1, L2, L3, L4);
a threshold value switch (SS) connected to the output of the differential amplifier (A);
a window discriminator (FD) connected to the output of the differential amplifier (A); and
a reference voltage source (REF) which is connected to both the threshold value switch (SS) and the window discriminator (FD).

3. Combination according to Claim 2, with the bridge circuit having an inductance (L1), which can be tuned by the target (T) as the first element, a fixed inductance (L2) as the second element, and two resistors (R3, R4), which are respectively connected in series with them, and with the resistors being arranged in an interface (I) which is at a distance from the sensor (S; L1, L2), characterized in that the further resistors (R_{N}, R_{F}, R_{C}) can be connected in parallel with the first and second resistors (R3, R4) via inputs (BN, BF, BC) of the interface (I).

## Revendications

1. Combinaison d'un dispositif de mesure de distance/position comprenant un circuit d'évaluation avec des moyens pour prédéfinir une plage déterminée par les tolérances admissibles des composants entre une courbe de transfert maximale (V_{Tmax}) et une courbe de transfert minimale (V_{Tmin}) et des moyens pour contrôler si une courbe de transfert réelle (f(s)) de la tension de sortie (V_{T}) se trouve à l'intérieur de cette plage, le dispositif de mesure présentant un circuit en pont symétrique qui est alimenté par une source (OSC) et présente dans chacune de ses branches un circuit série composé d'une première résistance (R3) ou d'une deuxième résistance (R4) et un premier élément (L1) ou un deuxième élément (L2) pouvant être déterminé par une cible (T), et dont les diagonales sont raccordées au circuit d'évaluation (A, FD, SS, REF), pour délivrer un premier signal (L) lorsque la cible est proche et une deuxième signal (H) lorsque la cible est éloignée en fonction du dépassement dans un sens ou dans l'autre d'une valeur de référence donnée par la courbe de transfert (V_{T}), le circuit d'évaluation présentant une troisième et une quatrième résistances (R_{N}, R_{F}) qui peuvent être branchées en parallèle à la première et à la deuxième résistances (R3, R4) par le biais d'un premier et d'un deuxième commutateurs (S1, S2) pour simuler une cible (T) proche ou éloignée, caractérisée en ce que le circuit d'évaluation présente une cinquième résistance (R_{C}) qui peut être branchée en parallèle à la deuxième résistance (R4) du circuit en pont par le biais d'un troisième commutateur (S3) lorsque la cible est éloignée afin de modifier la tension à la sortie du circuit en pont d'une valeur (BC) au moins égale à une plage de tolérance définie par les tolérances des composants.

2. Combinaison selon la revendication 1, caractérisée en ce que le circuit d'évaluation comprend :
un amplificateur différentiel (A) branché sur la diagonale du circuit en pont (L1, L2, R3, R4) ;
un commutateur de seuil (SS) branché à la sortie de l'amplificateur différentiel (A) ;
un discriminateur à fenêtre (FD) branché à la sortie de l'amplificateur différentiel (A) ; et
une source de tension de référence (REF) branchée au commutateur de seuil (SS) et au discriminateur à fenêtre (FD).

3. Combinaison selon la revendication 2, dans laquelle le circuit en pont présente comme premier élément une inductance (L1) pouvant être définie par la cible (T), comme deuxième élément une inductance fixe (L2) ainsi que deux résistances (R3, R4) branchées en série avec chacune d'entre-elles et les résistances sont disposées dans une interface (I) à une certaine distance du capteur (S, L1, L2), caractérisée en ce que les première et deuxième résistance (R3, R4) peuvent être branchées en parallèle avec les autres résistances (R_{N}, R_{F}, R_{C}) par le biais des entrées (BN, BF, BC) de l'interface (I).
